Europäisches Patentamt

European Patent Office

Office européen des brevets

(11) Publication number: **0 106 629**
**A1**

## (12) EUROPEAN PATENT APPLICATION

(21) Application number: **83306037.9**

(22) Date of filing: **05.10.83**

(51) Int. Cl.³: **G 09 F 21/04**

(30) Priority: **06.10.82 FI 823394**

(43) Date of publication of application:
**25.04.84 Bulletin 84/17**

(84) Designated Contracting States:
**AT BE CH DE FR GB IT LI LU NL SE**

(71) Applicant: **VEERA-KAIHDIN KY**
**Soukantie 13**
**SF-02361 Espoo 36(FI)**

(72) Inventor: **Kalliojarvi, Sakari Tapio**
**Nissnikuntie 6 E 10**
**SF-02430 Masala(FI)**

(74) Representative: **Carpmael, John William Maurice et al,**
**CARPMAELS & RANSFORD 43 Bloomsbury Square**
**London, WC1A 2RA(GB)**

(54) **Advertisement curtain.**

(57) The present invention relates to an advertisement curtain to be installed in a window, most suitably the back window of an automobile. It is previously known to fit a sunshade curtain to the back window of an automobile. However, the use of curtains which hamper visibility is prohibited in taxis. The present invention provides the possibility of printing an advertisement text or picture on a curtain (3) made of net, the curtain being almost fully transparent from the inside of the automobile. A rapid attachment mechanism (4) enables the advertisement curtain to be replaced rapidly and easily.

Fig. 2

EP 0 106 629 A1

1

Advertisement curtain

The present invention relates to an advertisement curtain to be installed in a window, most suitably the back window of an automobile.

It is previously known to attach to the back window of an automobile a sunshade curtain which can be pulled from a roller cassette to cover the back window of the automobile. It is also previously known to attach advertising stickers to the back windows of automobiles, especially taxis. A combination of the above-mentioned inventions, i.e. incorporating an advertisement into a curtain to be installed in the back window of a taxi is not possible, since the use of a curtain which hampers visibility is prohibited in taxis.

The object of the invention is to introduce an advertisement curtain to be installed in the back window of an automobile, a curtain which is transparent from the inside, but from the outside of which it is possible to read an advertising text or picture printed on it. This is achieved by making the curtain from a large-mesh net of the type of a mosquito net.

The characteristics of the invention are given in accompanying Claim 1.

The mesh size of a net suitable for the purpose can most suitably vary between 1 x 1 mm and 2 x 2 mm. Expressed in another way, the proportion covered by the threads of the net is suitably 15-30 % of the total area of the curtain. The advertising text for one side of the advertisement curtain is printed on it by, for example, the silk screen process.

The invention is described below also with the aid of one example, with reference to the accompanying drawing, in which

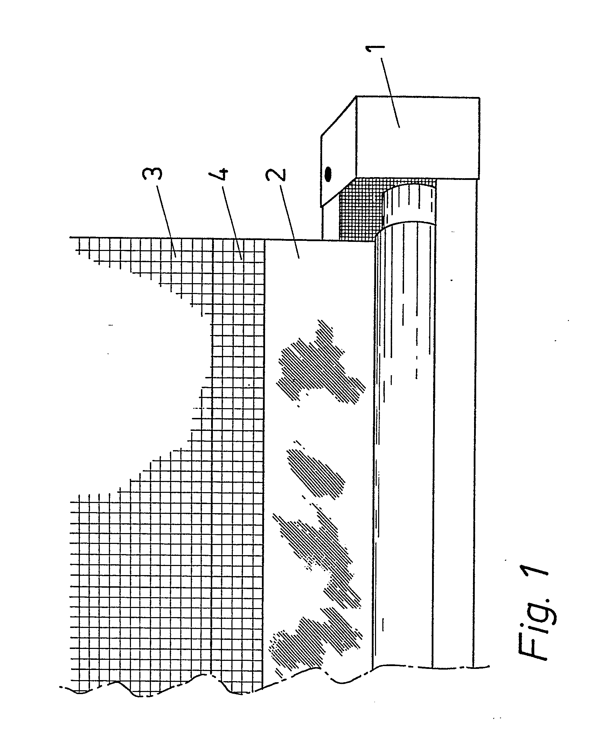

Figure 1 depicts a roller mechanism suitable for use in conjunction with the curtain according to the invention, and

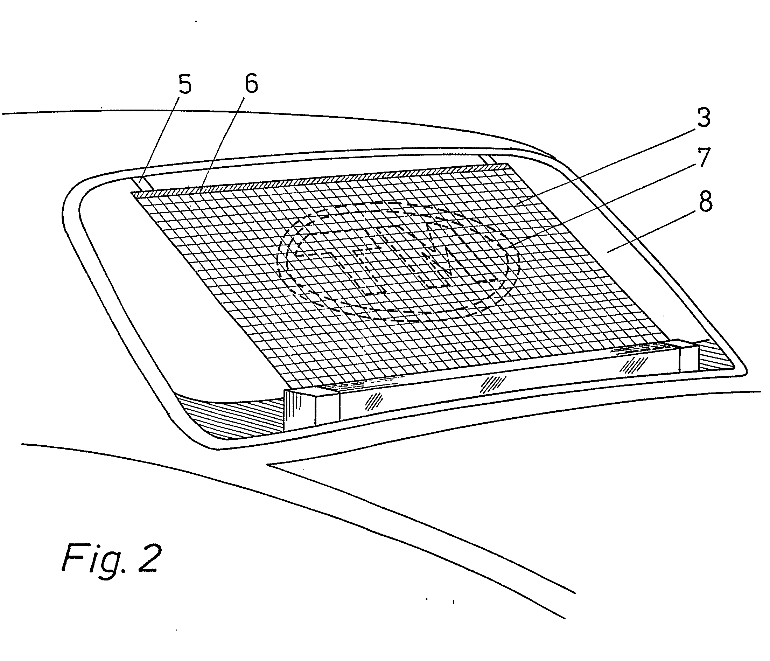

Figure 2 is a diagrammatic representation of an advertisement curtain installed in the back window of an automobile.

In the figures, reference numeral 1 indicates a roller cassette, which is attached, for example, behind the back rest of the back seat of the automobile, usually to the so-called hat shelf at the level of the lower edge of the back window 8. Advantageously a length of normal curtain 2 is attached to the mechanism, and at the end, i.e. the free edge of this curtain, there is a part, for example an adhesive tape 4, suitable for being attached to the advertisement curtain.

Attachment lugs 5 and an attachment strip 6 for the attaching of the upper edge of the advertisement curtain 3 are fitted above the back window of the automobile. The strip can also be fixed to the curtain. The curtain is kept taut by the spring in the roller cassette in the normal manner.

As presented above, the curtain material is netlike in such a way that it does not notably hamper visibility from the inside. Nevertheless, the advertisement 7 printed on the outer surface of the curtain is seen well from the outside.

3

Owing to the adhesive tape attachment the curtain can be
replaced easily and rapidly.

Claims

1.   An advertisement curtain to be installed in a window, most suitably the back window of an automobile, c h a r a c t e r i z e d   i n   that the curtain is of  net       (3) which is transparent when seen from the darker side of the window, for example from inside the automobile, and from the lighter side of the window it is possible to read the advertisement printed on it.

2.   A curtain according to Claim 1, c h a r a c t e r i z e d i n   that the curtain (3) is made of a net having a mesh size between 1 x 1 mm and 2 x 2 mm.

3.   A curtain according to Claim 2, c h a r a c t e r i z e d i n   that the proportion covered by the net threads is 15-30 % of the total curtain area.

4.   A curtain according to any of Claims 1-3, c h a r a c t e r i z e d   i n   that the text is printed on it by the silk screen process.

5.   A curtain according to any of Claims 1-4, c h a r a c t e r i z e d   i n   that one of its ends is attached to the roller cassette (1) of a roller curtain rod by means of an adhesive tape (4) or a similar rapid attachment mechanism.

Fig. 1

Fig. 2

0106629

**European Patent Office**

**EUROPEAN SEARCH REPORT**

Application number

EP 83 30 6037

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-2 088 613 (COOKE)<br>* Claim 1; page 1, lines 59-69, 82-84, 112-116 * | 1-5 | G 09 F 21/04 |
| | --- | | |
| A | BE-A- 878 432 (BREVERS)<br>* Claim 3 * | 1,4 | |
| | --- | | |
| A | GB-A- 476 715 (DE PLANCKE)<br>* Page 1, lines 39-54 * | 1 | |
| | ----- | | |

TECHNICAL FIELDS SEARCHED (Int. Cl. 3)

B 60 J 1/00
G 09 F 21/00
B 60 R 13/00

The present search report has been drawn up for all claims

| Place of search<br>THE HAGUE | Date of completion of the search<br>03-01-1984 | Examiner<br>OSBORNE J. |
|---|---|---|